# EUROPEAN PATENT SPECIFICATION

(11) **EP 0 525 065 B1**
(45) Date of publication and mention of the grant of the patent: **22.12.1993**
(21) Application number: 91908348.5
(22) Date of filing: 17.04.1991
(51) Int. Cl.: A23L 3/3409, A23L 3/3418, A23B 4/16, B65B 25/00

(54) **IN SITU METHOD FOR EXTENDING THE SHELF LIFE OF PERISHABLE PRODUCTS**
IN SITU VERFAHREN ZUR VERLÄNGERUNG DER HALTBARKEIT VON VERDERBLICHEN PRODUKTEN
PROCEDE DE PROLONGATION IN SITU DE LA DUREE DE CONSERVATION DE PRODUITS PERISSABLES

(30) Priority: 19.04.1990 US 510947
(43) Date of publication of application: 03.02.1993
(73) Proprietor: PAKOR, INC., Livingston, TX 77531 (US)
(72) Inventor: MITCHELL, Jerry, L., Linvingston, TX 77351 (US)
(74) Representative: Dost, Wolfgang, Dr.rer.nat., Dipl.-Chem.
(86) International application number: US9102639
(87) International publication number: WO9115969

(56) References cited:
- FR-A- 1 136 525
- FR-A- 2 481 672
- GB-A- 2 031 710
- US-A- 3 939 287
- Patent Abstracts of Japan, vol. 12, no. 258 (C-513)(3105), 20 July 1988 & JP, A, 63042676 /DAISHIRO FUJISHIMA) 23 February 1988
- Patent Abstracts of Japan, vol. 5, no. 89 (C-58)(761), 10 June 1981 & JP, A, 56035975 /ASAHI DOW K.K.) 8 April 1981
- Patent Abstracts of Japan, vol. 5, no. 156 (C-74)(828), 6 October 1981& JP, A, 56088786 (HIROE OGAWA) 18 July 1981

## Description

The present invention generally relates to a method for extending the shelf life of perishable products by exposing said products to an oxidizer, preferably ozone gas, for a time sufficient to substantially reduce microbial activity on the surface of said product. More specifically, the present invention relates to a method whereby a selected concentration of an oxidizer is introduced into a sealed container containing a perishable product for a time sufficient to neutralize or eliminate microbial activity present on said product, whereupon said oxidizer is removed or diluted. When microbial activity has thus been neutralized, the product may be exposed to a vacuum or other gases for purposes of transportation or presentation to the consumer.

Perishable products, specifically meat, poultry, or fish products, are generally cleaned and packaged at a slaughterhouse or other processing facility preparatory to shipment to various retail outlets. These products are commonly packaged in containers such as plastic wrapped trays, pouches of plastic, paper or plastic coated paper bags, food storage tubes and the like. These containers are typically pliant relative to rigid cans, bottles and cans in that they are flexible or soft to the touch. They are also frequently transparent, as in the case of meats, to enable customers to view the product. These products, especially meats, are also commonly packaged in the oxygen-nitrogen atmosphere naturally occurring at such processing facilities. Packaging of perishable products in such a fashion, however, ordinarily causes fairly rapid reduction of the quality of the product with resultant spoilage. This phenomenon occurs, though at a slower pace, even when such products are maintained in a refrigerated condition.

Product spoilage is partially a result of the multiplication of bacteria introduced onto the surface of the product during processing. Such contamination is particularly pronounced in the processing of poultry. Moreover, the atmosphere introduced into the product container also contributes to spoilage since such atmosphere may contain a variety of airborne bacteria. Spoilage is also enhanced by "cross contamination" which is often brought about as a result of the common handling of such products by human or mechanized devices during the packaging stage. In such cases, contamination may be widely spread and distributed as the result of common handling.

The rate of increase in the number of surface bacteria determines in large part the shelf life of the product. In this respect, a perishable product is generally considered to have a shelf life determined by the amount of time necessary for the bacterial count to reach proportions which render the product unfit for consumption. This shelf life varies depending on the product and the conditions under which the product is processed and packaged. Fish and poultry traditionally have very short shelf lives when stored in an unfrozen state, whereas the shelf life for meat is generally longer. Regardless of the type of product, however, the presence of certain bacteria, especially the salmonella bacteria, can render the product dangerous for consumption even when present in small amounts.

As a result of the above described problems relating to bacterial growth, perishable products are refrigerated or frozen to enhance their shelf life. A lowering in temperature is effective to reduce spoilage, since it results in a slowing of the rate of reproduction of the bacteria. For this reason, a perishable product generally will not spoil if frozen, but will almost immediately spoil if stored at room temperature in the absence of preservatives.

A number of techniques have evolved to utilize the benefits of freezing. One commercial preservation and storage method involves subjecting various products, especially pork and poultry, to temperatures slightly below 32°F (0°C). This technique, often referred to as "crusting" literally involves the freezing of the outer layer of the product. Products subjected to this technique are "slacked out" and displayed for sale in a refrigerated, non frozen state. Bulk retail and institutional packages of various perishable products are sometimes handled in this fashion.

Some products, however, especially poultry products, are felt to deteriorate in quality once subjected to freezing. Additionally, it is often times undesirable to freeze a product if further processing is contemplated at a secondary processing facility. For these reasons, other techniques have been developed to store or transport the product while maintaining the product at temperatures above freezing.

One such technique is vacuum packing. Vacuum packing inhibits bacterial growth by removing the operative oxygen environment necessary to sustain aerobic growth. Disadvantages with vacuum packing, however, include the purplish color induced in meat products which often times inhibits the appearance of such products for purposes of retail sale. Vacuum packing also results in the creation of an undesirable liquid exudate which is caused by package pressure differential. If commercial sale of vacuum packed products is desired, the product also must often be removed from the vacuum pack and exposed to oxygen such that the meat may "bloom." When exposed to oxygen, however, surface bacteria derived from the processing or packing stage are then able to multiply and soon begin to move the product toward spoilage.

Other non-frozen techniques have been employed to enhance the life of a perishable product. A second technique involves packing the product in a carbon dioxide atmosphere. The C0₂ atmosphere, like the vacuum pack, also inhibits the growth of aerobic bacteria. Similar to the vacuum pack, however, the C0₂ atmosphere does not reduce the number of bacteria on the product resultant from processing or packing. Thus the product, when exposed to an aerobic environment, begins to degrade as a result of residual bacteria.

The above described techniques are useful, therefore, only from the standpoint of marginally prolonging the life of a perishable product during shipping, or when it is otherwise possible to maintain an aerobic environment around the product. These techniques do not, however, result in the destruction of bacteria. Moreover, these techniques fail to check the growth of anaerobic bacteria.

Ozone (0₃) has been widely used as an oxidizing agent for bacterial, virus, and mold control for meat and fish storage, fresh fish processing, produce storage, restaurants, cooling towers, animal feed products, marine life, beverage plants, swimming pools, potable water systems, and tertiary waste systems. Ozone is also currently widely used for odor control in air conditioning systems, industrial plants, restaurants, mortuaries, rest homes and other applications. Ozone gas is a very strong oxidizing agent having an oxidation potential more than twice that of chlorine and approximately three times that of hydrogen peroxide. Ozone also has the advantage of breaking down upon use as an oxidant into oxygen, which is normally beneficial. The use of ozone for the sterilization or preservation of food products is described in U.S. Patent No. 4,549,477. The '477 patent describes both the historical applications (batch process) as well as the application of ozone in a continuous process whereby the perishable product is moved through a treatment zone filled with ozone.

Disadvantages associated with the above described prior art techniques utilizing ozone include the possibility of recontamination of the product after it is moved out of the ozone flushed region and into a packaging area. This possibility of contamination is enhanced if the product is not already positioned in the package but must be positioned either mechanically or manually. Further, the aforedescribed processes do not allow for the possible retention of a partial amount of the oxidizing gas in the package.

The present method addresses the above noted and other disadvantages by providing a method in which the non-frozen shelf life of a perishable product may be greatly enhanced. Additionally, the present method may enable the storage of products at temperatures above those ordinarily believed necessary to prevent spoilage. Thus, the invention is especially directed at the packaging of non-frozen, perishable products which are marketed in pliant containers. Treatment of the products to enhance their quality, appearance or other aspects is carried while the products are in a sealed, packaged condition.

In a general aspect, the present invention is directed to a method whereby a perishable product is exposed to an oxidizer for a time sufficient to eliminate or substantially reduce the number of microorganisms present on the surface of said product. More specifically, the present invention is directed to a method of sealing a perishable product in a gas tight package while simultaneously subjecting the product to direct contact with an oxidizer so as to result in the containment of the oxidizer environment in the package. This oxidizing environment is maintained around the product for such time as is necessary to neutralize microorganisms present on its surface. A second gas may then be introduced into the package for purposes of transportation, storage, or presentation of the product to the consumer.

In accordance with the invention, the package is sealed in a controlled environment containing a selected concentration of an oxidizing gas. When the product has been exposed to the oxidizer for a sufficient time, depending on a number of variables including the type of product or the product weight, the oxidizer is withdrawn or flushed from the package and the package is filled with a gas suitable for transportation, or alternatively, an environment suitable for presentation to the consumer. This gas may include a C0₂ atmosphere adapted to suppress the growth of any bacteria not eliminated as a result of exposure to the oxidizer. Alternatively, an oxygen rich atmosphere may be introduced into the package so as to enhance the appearance of the meat product for purposes of retail sale. In another aspect, a vacuum may also be drawn around the product subsequent to introduction of the oxidizer. In a preferred aspect of the invention, the oxidizer is withdrawn from the product package via a valve disposed in the package so as to maintain the sealed gas tight integrity of the package itself. A septum valve is especially contemplated, because of its self-sealing activity.

The method of the present invention has a number of advantages over the art. One such advantage is the ability of the present method to significantly reduce the number of aerobic and anaerobic microorganisms present on the surface of a given product. In such a fashion the shelf life of the product can be substantially increased. When used in combination with conventional preservation techniques such as freezing, an even greater shelf life may be realized. Further, the elimination or substantial reduction in the number of surface bacteria resultant from the present method allows for the storage of some perishable products for extended periods of time without the need for refrigeration. This is beneficial in remote areas or in the event that refrigeration facilities are unavailable.

The present invention is directed to a method for substantially extending the shelf life of a perishable product, e.g., a meat, poultry, or fish product, by exposing the product to an oxidizing agent for a time sufficient to kill or substantially reduce a substantial majority of microorganisms present on the surface of the product. When the perishable product has been in contact with the oxidizer for a sufficient period of time, the oxidizer is entirely or partially removed, whereupon the package is evacuated or filled with a second gas compatible with the considerations of the consumer.

Though the present invention has particular application to fresh meat, poultry or fish products, application of the method of the invention to other perishable products is also contemplated within the spirit of the invention. Likewise, the present invention may have application in the area of medical technology or research or similar areas where sterilization is desired.

In a preferred mode of the present invention, a perishable product is placed in a gas tight package tray having means to raise the product above the surface of the tray so as to allow maximum gas circulation about the exterior of the product. Such a tray design is seen in applicant's co-pending application Serial No. 214,195. A gas tight top is then secured to the tray, thus sealing the atmosphere present during the packaging process. Alternately, other hermetically sealed containers may be used such as for example, flexible film pouches, plastic coated paper bags, or food storage tubes. It is desirable that such package or tray be provided with a septum valve or other resealable system valve so as to enable gas extraction or modification while the sealed condition of the package is maintained. An example of such a package design is seen in applicant's corresponding application serial no. 214,915.

During this packaging procedure, a controlled concentration of an oxidizer solution is introduced into the package so as to ensure contact between the oxidizer and all surfaces of the product. It is envisioned that ozone gas (O₃) may be used, although gaseous forms of other oxidizers such as fluorine (F₂), hydrogen peroxide, (H₂O₂) potassium permangerate (KMnO₄), hypobromous acid (HOBr), hypochlorous acid (HOCl), chlorine (Cl₂), chlorine dioxide (ClO₂), Oxygen (O₂), Bromine (Br₂), or Iodine (I₂), are also contemplated within the present invention though not all such oxidizers would be compatible with food products. Moreover, it will be recognized that some oxidizers may be more effective than others for any given product. Preferably, the above described packaging processes are undertaken in a sealed chamber such as those utilized to manufacture gas flush packaging.

The type, weight, and age of the product determine both the concentration of the oxidizer and the amount of time it is maintained in contact with the product's surface. Retention time is also determined by the type of oxidizer used in conjunction with the product. In instances involving fish or poultry, it may be necessary to use higher concentrations of the oxidizer. In such instances, it may also be desired to allow a longer residence time of the oxidizer around the product. Such may also be true when the product includes a high fat content which may be particularly susceptible to oxidation. For instances where the sterilization of a medical or other nonorganic material is contemplated, concentrations and residence times of the exposure may expectedly increase.

When a desired residence time has been completed, the oxidizer may be flushed or evacuated from the package. Alternatively, the oxidizer may be diluted by the injection of a second gas into the sealed container. In some instances it may be desired to draw a vacuum in the package for purposes of transporting the product. This latter option may be desirable since the maintenance of a vacuum substantially inhibits bacterial growth which is already substantially reduced by exposure to the oxidizer. In other instances, it may be desirable to replace the oxidizer with a growth inhibiting gas such as CO₂. In all instances where gas injection or replacement is contemplated, however, it is desired that the replacement gas be controlled so as to be substantially free of bacteria. It is further desired that gas exchange or modification be conducted while the product remains in the sealed container.

Gas exchange may be conducted in a manner disclosed in applicant's corresponding application. Utilizing such an apparatus, gas exchange, extraction or modification may be accomplished while maintaining the sealed condition of the package.

## Claims

1. A method for processing a perishable product so as to enhance its shelf life comprising the sequential steps of:
positioning the product in a gas impermeable package;
sealing said product in said package while simultaneously exposing said product to an oxidizer capable of reducing microbial activity on the product so as to include said oxidizer in said package;
maintaining said oxidizer in said package and in communication with said product for a time sufficient to inhibit microbial activity on the surface of said product; and
removing said oxidizer from said package while maintaining the sealed condition of said package.

2. The method of claim 1 wherein said oxidizer comprise O₃, F₂, H₂O₂, KMnO₄, ClO₂, Cl₂, O₂, Br₂, I₂, HOBr, or HOCl.

3. The method for enhancing the shelf life of a perishable product comprising the sequential steps of:
sealing the product in a gas tight container in the presence of an oxidizer;
maintaining said oxidizer in said container for a time sufficient for said oxidizer to react with microorganisms occurring on the surface of said product;
extracting said oxidizer from said container through a valve located in said container; and
introducing a second, microorganism growth inhibiting gas in said container.

4. The method of claim 1 wherein a first gas is extracted from the interior of said package, while maintaining the sealed condition of said package, before said product is exposed to an oxidiser and further wherein said step of exposing said product to an oxidizer includes the step of injecting a selected concentration of a gaseous oxidizing agent into said package while maintaining the sealed condition thereof.

5. The method of claim 4 including the step of withdrawing the majority of said oxidizing agent from said package and replacing said agent with a third gas.

6. The method of claim 5 wherein gas exchange is accomplished by a resealable valve disposed in said package.

7. The method of claim 4 wherein the oxidizing agent is O₃, F₂, H₂O₂, KMnO₄, ClO₂, Cl₂, O₂, Br₂, I₂, HOBr, or HOCl.

8. The method of claim 5 where said third gas reduces spoilage on said product.

9. The method of claim 8 where said third gas includes CO₂.

10. The method of claim 1 wherein said package is a pliant container.

11. The method of claim 1 wherein the removal of said oxidizing agent is effected by flushing the gaseous oxidizer from the container with another gas capable of suppressing bacterial spoilage of the product.

12. The method of claim 11 in which the product is a meat product and these other gas comprises oxygen in an amount sufficient to bloom the meat product.

## Patentansprüche

1. Verfahren zur Behandlung eines (leicht) verderblichen Erzeugnisses zur Verbesserung der Haltbarkeit, wobei das Verfahren die aufeinanderfolgenden Schritte aufweist:
Positionieren des Erzeugnisses in einer gasundurchlässigen Verpackung;
Abdichten des Erzeugnisses in der Verpackung, während gleichzeitig das Erzeugnis einem Oxidationsmittel, das zur Reduzierung der mikrobiellen Aktivität auf dem Erzeugnis in der Lage ist, ausgesetzt wird, derart, daß das Oxidationsmittel in der Verpackung eingeschlossen ist;
Halten des Oxidationsmittels in der Verpackung und in Beziehung mit dem Erzeugnis für eine Zeit, die zur Inhibierung der mikrobiellen Aktivität auf der Oberfläche des Erzeugnisses ausreichend ist; und
Entfernen des Oxidationsmittels aus der Verpackung, während der abgedichtete Zustand der Verpackung aufrechterhalten wird.

2. Verfahren nach Anspruch 1, wobei das Oxidationsmittel O₃, F₂, H₂O₂, KPMnO₄, ClO₂, Cl₂ O₂, Br_{2,} I₂, HOBr oder HOCl aufweist.

3. Verfahren zur Erhöhung der Haltbarkeit eines (leicht) verderblichen Erzeugnisses, wobei das Verfahren die aufeinanderfolgenden Schritte aufweist:
Abdichten des Erzeugnisses in einem gasdichten Behälter in Gegenwart eines Oxidationsmittels;
Halten des Oxidationsmittels in dem Behälter für eine Zeit, die für das Oxidationsmittel ausreichend ist, um mit auf der Oberfläche des Erzeugnisses vorkommenden Mikroorganismen zu reagieren;
Extrahieren des Oxidationsmittels aus dem Behälter durch ein in dem Behälter angeordnetes Ventil; und
Einführen eines zweiten, Mikroorganismuswachstum-inhibierenden Gases in den Behälter.

4. Verfahren nach Anspruch 1, wobei ein erstes Gas aus dem Inneren der Verpackung extrahiert wird, während der abgedichtete Zustand der Verpackung aufrechterhalten wird, bevor das Erzeugnis einem Oxidationsmittel ausgesetzt wird, und wobei weiterhin die Stufe, bei der das Erzeugnis einem Oxidationsmittel ausgesetzt wird, die Stufe des Injizierens einer ausgewählten Konzentration an gasförmigem Oxidationsmittel in die Verpackung umfaßt, während ihr abgedichteter Zustand aufrechterhalten wird.

5. Verfahren nach Anspruch 4, umfassend die Stufe des Entfernens des Hauptteils des Oxidationsmittels aus der Verpackung und des Ersetzens des Mittels durch ein drittes Gas.

6. Verfahren nach Anspruch 5, wobei ein Gasaustausch durch ein wiederabdichtbares in der Verpackung angeordnetes Ventil erreicht wird.

7. Verfahren nach Anspruch 4, wobei das Oxidationsmittel O₃, F₂, H₂O₂, KMnO₄, ClO_{2,} Cl₂, O₂, Br₂, I₂, HOBr oder HOCl ist.

8. Verfahren nach Anspruch 5, wobei das dritte Gas eine Schädigung auf dem Erzeugnis reduziert.

9. Verfahren nach Anspruch 5, wobei das dritte Gas CO₂ umfaßt.

10. Verfahren nach Anspruch 1, wobei die Verpackung ein faltbarer Behälter ist.

11. Verfahren nach Anspruch 1, wobei die Entfernung des oxidationsmittels bewirkt wird durch Ausspülen des gasförmigen Oxidationsmittels aus dem Behälter mit einem anderen Gas, das zur Unterdrückung eines bakteriellen Verderbs des Erzeugnisses in der Lage ist.

12. Verfahren nach Anspruch 11, wobei das Erzeugnis ein Fleischerzeugnis ist, und dieses andere Gas Sauerstoff in einer ausreichenden Menge aufweist, die das Fleischerzeugnis ansprechend aussehen läßt.

## Revendications

1. Un procédé pour traiter un produit périssable de manière à accroître sa durée de stockage, comprenant les étapes successives consistant à:
disposer le produit dans un conditionnement imperméable aux gaz;
sceller ce produit dans ce conditionnement tout en exposant, simultanément, le produit à un oxydant capable de réduire l'activité microbienne sur le produit de manière à inclure cet oxydant dans le conditionnement;
maintenir cet oxydant dans le conditionnement et en communication avec le produit pendant un temps suffisant pour inhiber l'activité microbienne en surface du produit ; et
retirer l'oxydant du conditionnement tout en maintenant l'état scellé du conditionnement.

2. Le procédé de la revendication 1, dans lequel ledit oxydant comprend O₃, F₂, H₂O₂, KMnO₄, ClO₂, Cl₂, O₂, Br₂, I₂, HOBr ou HOCl.

3. Le procédé pour accroître la durée de stockage d'un produit périssable, comprenant les étapes successives consistant à:
sceller le produit dans un emballage étanche aux gaz en présence d'un oxydant;
maintenir cet oxydant dans l'emballage pendant un temps suffisant pour que l'oxydant réagisse avec les micro-organismes apparaissant en surface du produit;
extraire l'oxydant de l'emballage via une valve située dans cet emballage ; et
introduire dans l'emballage un second gaz inhibiteur de la croissance des micro-organismes.

4. Le procédé de la revendication 1, dans lequel, tout en maintenant l'état scellé du conditionnement, on extrait un premier gaz de l'intérieur du conditionnement avant d'exposer le produit à un oxydant, et dans lequel, en outre, l'étape consistant à exposer le produit à un oxydant comprend l'étape consistant à injecter une concentration choisie d'un agent oxydant gazeux dans le conditionnement tout en maintenant l'état scellé de celui-ci.

5. Le procédé de la revendication 4, comprenant l'étape consistant à extraire du conditionnement la majeure partie de l'agent oxydant et à remplacer cet agent par un troisième gaz.

6. Le procédé de la revendication 5, dans lequel l'échange des gaz est réalisé par une valve rescellable placée dans le conditionnement.

7. Le procédé de la revendication 4, dans lequel l'agent oxydant est O₃, F₂, H₂O₂, KMnO₄, ClO_{2,} Cl₂, O₂, Br₂, I₂, HOBr ou HOCl.

8. Le procédé de la revendication 5, dans lequel le troisième gaz réduit l'altération sur le produit.

9. Le procédé de la revendication 8, dans lequel le troisième gaz comprend CO₂.

10. Le procédé de la revendication 1, dans lequel le conditionnement est un emballage pliable.

11. Le procédé de la revendication 1, dans lequel le retrait de l'agent oxydant est réalisé en balayant hors de l'emballage l'oxydant gazeux avec un autre gaz capable de supprimer l'altération bactérienne du produit.

12. Le procédé de la revendication 11, dans lequel le produit est un produit carné et ledit autre gaz comprend de l'oxygène en quantité suffisante pour permettre l'épanouissement du produit carné.
